Europäisches Patentamt

European Patent Office

Office européen des brevets

(11) Publication number: **0 414 432 A1**

## EUROPEAN PATENT APPLICATION

(21) Application number: 90308920.9

(51) Int. Cl.⁵: **C01B 13/11**

(22) Date of filing: 14.08.90

(30) Priority: 15.08.89 US 394218

(43) Date of publication of application:
27.02.91 Bulletin 91/09

(84) Designated Contracting States:
AT BE CH DE DK ES FR GB GR IT LI LU NL SE

(71) Applicant: **Carvalho, Rocky**
**3881 Denver Park**
**Klamath Falls, Oregon 97601(US)**

(72) Inventor: **Carvalho, Rocky**
**3881 Denver Park**
**Klamath Falls, Oregon 97601(US)**

(74) Representative: **Skerrett, John Norton Haigh**
**et al**
**H.N. & W.S. Skerrett Charles House 148/9**
**Great Charles Street**
**Birmingham B3 3HT(GB)**

(54) Ozone generator.

(57) An ozone generator is comprised of a glass tube
(10) having an inert gas in it and a tungsten or
stainless steel electrode (14) which extends from
one of its ends towards the other end. A grid (20)
surrounds the tube (10) and receives current from
the electrode (14) to convert oxygen to ozone. The
glass tube (10) is formed from a high temperature,
nonleaded glass, such as PYREX or GLASSEX and
the gas in the tube comprises a mixture of two parts
argon and one part helium. The electrode (14) may
be coated with lithium in order to facilitate firing of
the generator without need for introducing mercury
for this purpose.

EP 0 414 432 A1

## OZONE GENERATOR

Background and Summary of the Invention

This invention relates to gas-filled ozone generators, and from one aspect it relates in particular to the material used for the glass tubes and the electrodes in such generators.

Glass tubes which are filled with an inert gas and have an electrode running centrally through them and an electrically conductive grid around them are used to generate ozone in a wide number of applications. Such a generator is shown in Arff, U.S. Patent No. 3,565,776. However, these prior art ozone generators have several shortcomings which limit their usefulness.

First, the gas contained in them generally comprises a mixture of approximately equal parts of argon and helium. While this mixture of gases transmits current well for the intended purpose, it tends to separate into its constituent parts in use. As a result, the efficiency of the tube varies along its longitudinal extent, thereby reducing its overall efficiency. In addition, due to the separation, it is difficult to determine what the actual output of a tube using this mixture of gases will be. Accordingly, quality control becomes a problem.

Second, these tubes heretofore have been made from leaded glass. Over time, glass of this type absorbs the mercury which is usually placed in the tubes to aid in initially firing them. The absorbed mercury clouds the tube thereby reducing its efficiency, and eventually prevents the tube from firing.

In addition, it is necessary to seal the ends of the tubes in the generators to prevent escape of the gas contained in them. Since the electrodes, which are contained in the tubes, must pass through these sealed ends, it is important that the electrodes have approximately the same coefficient of thermal expansion that the glass does so as to prevent it from breaking away from the sealant and causing leaks. With the leaded glass of the prior art tubes, the only material which serves this purpose is that known as Demitt. However, Demitt is not strong enough at the temperature such electrodes operate at to span the entire length of the tube without breaking. Thus, Demitt ends have been welded to steel electrodes.

Fabricating a two material electrode is labour extensive and thus adds considerably to the cost of the generator. In addition, if the Demitt portion is too long the risk of breakage occurs, and if the Demitt portion is too short the steel electrode will extend into the sealant and leakage may occur. As a result, two material electrodes create quality control problems.

The present invention overcomes the shortcomings of the prior art ozone generators by providing a tube which is fabricated from a high temperature, nonleaded glass, such as PYREX or GLASSEX. Since PYREX and GLASSEX do not absorb mercury, in generators containing mercury they do not become clouded with use and the efficiently of the generator remains high. Also, PYREX and GLASSEX have a coefficient of thermal expansion which is similar to tungsten and stainless steel. Because tungsten and stainless steel are strong enough at the temperature at which such an electrode operates to span the entire tube, their use permits the electrode to be made in one piece.

In an alternate embodiment of the invention mercury is not put in the tube and its function in starting the generator is served by coating the electrode with a thin layer of lithium.

The present invention, at least in preferred embodiments, also uses a mixture of gases which comprises substantially two parts argon and one part helium rather than the 50/50 mixture used in the prior art. This mixture does not tend to separate like a 50/50 mixture does and, as a result, the output of the tube is predictable and remains uniform over its entire length and constant over the life of the generator. This use of a mixture of substantially two parts of argon and one part of helium also constitutes a further aspect of the invention.

Accordingly, it is an object of the present invention to provide a glass tube for an ozone generator which does not absorb any mercury mixed with the gas which fills the tube.

It is a further object to provide such a glass tube which permits the use of a one-piece tungsten or stainless steel electrode therein.

It is a still further object in preferred embodiments of the present invention to provide a gas mixture for an ozone generator which remains uniformly mixed over the entire extent of the tube in which it is contained and over the life of the generator.

The foregoing and other objectives, features and advantages of the present invention will be more readily understood upon consideration of the following detailed description of an embodiment of the invention taken in conjunction with the accompanying drawings.

BRIEF DESCRIPTION OF THE DRAWINGS

FIGURE 1 is a foreshortened side elevation view of the glass tube which is a portion of the ozone generator of said embodiment of the present invention.

FIGURE 2 is a sectional view along the line 2-2 in FIGURE 1.

FIGURE 3 is a foreshortened side elevation view, partially broken away to show hidden detail, of the ozone generator of said embodiment of the present invention.

FIGURE 4 is a sectional view taken along the line 4-4 of FIGURE 3.

FIGURE 5 is a sectional view taken along the line 5-5 of FIGURE 3.

FIGURE 6 is a schematic showing the electrical circuitry of the ozone generator.

Detailed Description

Referring to the drawings, the ozone generator of the embodiment of the present invention illustrated therein comprises a cylindrical tube 10, which for reasons set forth below is constructed from a high temperature, nonleaded glass, such as PYREX or GLASSEX. One end of the tube is closed and the other end contains a neck 12 with a small opening in it through which the tube can be filled with gas. A tungsten or stainless steel electrode 14 is supported in the centre of the tube by means of a series of spacers 16. The spacers 16 have openings 18 in them to permit flow of gas through the tube.

After the electrode or spacers are in place, with one end of the wire projecting out of the neck 12, the tube is evacuated and filled with an inert gas. The tube then is sealed by gluing an electrically conductive cap 21 over the neck end of the tube in contact with the electrode 14.

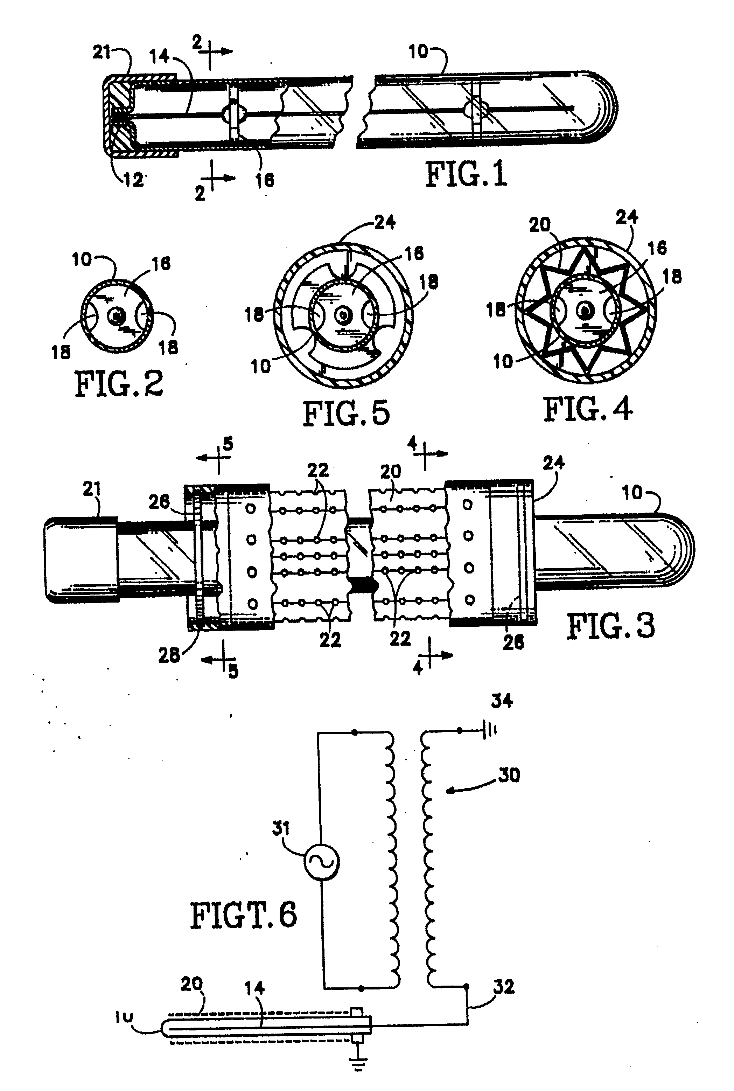

Located around the periphery of the tube is an electrically conductive grid 20 which is folded in a zigzag pattern to maximise its surface area, (see FIGURE 4). A series of holes 22 are located at spaced intervals along the peaks and valleys of the grid. The grid is enclosed within a cylindrical pipe 24, which preferably is made from a polyvinyl chloride material. Nonconductive support rings 26, located at each end of the pipe 24, center the tube 10 in the grid 20. The support rings are cemented into notches 28 located in the pipe 24.

Referring to FIGURE 6, the generator is powered by a transformer 30 which receives AC current from a standard 110-volt power supply 31 and amplifies it to approximately 6,000 volts. One secondary lead 32 of the transformer is attached to the electrode 14, through the cap 20, and the other secondary lead 34, and the grid 20, are connected to a common ground.

The inert gas, which fills the tube, is a mixture comprising substantially two parts argon and one part helium. This particular mixture does not separate during use, as was the case with the prior 50/50 mixture. Thus it achieves an even discharge when the tube is activated which increases the efficiency of the generator and provides far more certainty as to what the output of the generator will be. Also located within the tube is a pinhead of mercury which facilitates initial firing of the generator each time it is turned on.

As mentioned earlier, the tube 10 is made from a high temperature, nonleaded glass, such as PYREX or GLASSEX which serves two functions. First, leaded glass absorbs the mercury put into the tube to facilitate firing. The absorption of the mecury not only depletes the supply of mercury in the tube, which eventually decreases the ability of the tube to fire, but it also clouds the tube, thereby making it less efficient. PYRES, GLASSEX, and similar high temperature, nonleaded glasses, do not absorb mercury and thus these problems are eliminated.

Secondly, the coefficient of thermal expansion of PYREX and GLASSEX is similar enough to that of tungsten and stainless steel to permit the use of one-piece tungsten or stainless steel wire as the electrode. Accordingly, the expense of fabricating a two-piece electrode is eliminated.

In an alternate embodiment of the invention rather then placing mercury in the tube the tungsten or stainless steel electrode is coated with lithium. The lithium coating facilitates firing of the generator and the mercury is not required.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

Claims

1. An ozone generator of the type having a glass tube (10) filled with an inert gas, an electrically conductive electrode (14) located within the tube (10) and an electrically conductive grid (20) surrounding the tube, characterised in that the tube (10) is formed from nonleaded, high temperature glass.

2. An ozone generator as claimed in Claim 1 wherein said electrode (14) is a unitary piece of tungsten wire.

3. An ozone generator as claimed in Claim 1 wherein said electrode (14) is a unitary piece of stainless steel.

4. An ozone generator as claimed in any of the preceding claims, wherein said electrode (14) has a lithium layer on the outer surface thereof.

5. An ozone generator as claimed in any of the preceding claims, wherein said inert gas comprises a mixture of substantially two parts of argon to one part of helium.

6. An ozone generator of the type having a glass tube (10) filled with an inert gas, an electrically conductive electrode (14) located within the tube (10) and an electrically conductive grid (20) surrounding the tube, wherein said gas comprises substantially two parts of argon and one part of helium.

FIG.1

FIG.2

FIG.5

FIG.4

FIG.3

FIGT.6

European
Patent Office

**EUROPEAN SEARCH
REPORT**

Application Number

**EP 90 30 8920**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 764 349   (J.H. ARFF et al.)<br>* column 3, line 1 - column 4, line 14 *<br>— — — | 1 | C 01 B 13/11 |
| A | US-A-4 603 031   (H.A. GELBMAN)<br>* column 2, line 25 *<br>— — — | 1 | |
| A,D | US-A-3 565 776   (J.H. ARFF)<br>* claim 1 *<br>— — — | 1 | |
| A | FR-A-1 322 319   (L. GIRAUDON)<br>* abstract *<br>— — — — — | 1 | |

TECHNICAL FIELDS
SEARCHED (Int. Cl.5)

C 01 B 13/11

The present search report has been drawn up for all claims

| Place of search | Date of completion of search | Examiner |
|---|---|---|
| Berlin | 29 November 90 | CLEMENT J.P. |